# EUROPEAN PATENT APPLICATION

(11) **EP 4 557 126 A1**
(43) Date of publication of application: **21.05.2025**
(21) Application number: 22951199.3
(22) Date of filing: 15.07.2022
(51) Int. Cl.: G06F 16/35

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: KATAOKA, Masahiro, Kawasaki-shi, Kanagawa 211-8588 (JP); IWATA, Aya, Kawasaki-shi, Kanagawa 211-8588 (JP); TOKUDA, Takashi, Kawasaki-shi, Kanagawa 211-8588 (JP)
(74) Representative: Hoffmann Eitle
(86) International application number: PCT/JP2022/027902
(87) International publication number: WO 2024/013991

(57) **Abstract**

The information processing device acquires a plurality of sentences that contain a plurality of words. The information processing device executes, on the plurality of sentences, processing of specifying sets of feature words from the plurality of words, based on sentence vectors of the sentences that contain the plurality of words and word vectors of the plurality of words. The information processing device classifies the plurality of sentences such that the sentences that have a same one of the sets of the feature words are included in a same one of clusters.

## Description

### TECHNICAL FIELD

The present invention relates to an information processing program and the like.

### BACKGROUND ART

A huge amount of data such as text is registered in a database (DB), and there is a demand for appropriately locating data similar to a search query designated by a user through a search on such a DB. Hereinafter, the text will be described as a sentence containing a plurality of words.

In a conventional technique, an inverted index is set when a text is registered in a DB, and a data search is executed in a case where a search query is received. For example, in the conventional technique, when a text is registered in a DB in advance preparation, a vector of each sentence (hereinafter, a sentence vector) is calculated, and similar sentence vectors are classified into the same cluster. In the conventional technique, the positions of a plurality of sentences included in the same cluster and their representative vector are associated with each other and set in the inverted index, whereby the efficiency of the search processing is improved.

In the conventional technique, in a case where a sentence vector is calculated, the sentence vector is calculated by individually calculating each of word vectors of a plurality of words constituting the sentence and integrating the word vectors of all the words.

### CITATION LIST

### PATENT DOCUMENT

Patent Document 1: International Publication Pamphlet No. WO 2020/095357
Patent Document 2: Japanese Laid-open Patent Publication No. 2019-101993

### SUMMARY OF INVENTION

### TECHNICAL PROBLEM

A sentence includes a variety of words such as a noun, a verb, an adjective, and a particle, and when a sentence vector obtained by simply integrating word vectors of all words included in the sentence is calculated as in the conventional technique, the sentence vector may not sometimes clearly indicate the features of the sentence. When clustering is executed using such a sentence vector, a plurality of sentences that are supposed to be originally classified into different clusters may be sometimes classified into the same cluster.

In one aspect, an object of the present invention is to provide an information processing program, an information processing method, and an information processing device capable of appropriately clustering the text.

### SOLUTION TO PROBLEM

In a first idea, a computer is caused to execute the following processing. The computer acquires a plurality of sentences that contain a plurality of words. The computer executes, on the plurality of sentences, processing of specifying sets of feature words from the plurality of words, based on sentence vectors of the sentences that contain the plurality of words and word vectors of the plurality of words. The computer classifies the plurality of sentences such that the sentences that have a same one of the sets of the feature words are included in a same one of clusters.

### ADVANTAGEOUS EFFECTS OF INVENTION

A text may be appropriately clustered.

### BRIEF DESCRIPTION OF DRAWINGS

FIG. 1 is a diagram for explaining processing of specifying feature words of a sentence.
FIG. 2 is a diagram for explaining clustering processing.
FIG. 3 is a diagram (1) for explaining processing in a search phase.
FIG. 4 is a diagram (2) for explaining processing in the search phase.
FIG. 5 is a functional block diagram illustrating a configuration of an information processing device according to the present embodiment.
FIG. 6 is a diagram illustrating an exemplary data structure of a word vector dictionary.
FIG. 7 is a diagram illustrating a data structure of an inverted index.
FIG. 8 is a flowchart illustrating a processing procedure of a preparation phase of the information processing device according to the present embodiment.
FIG. 9 is a flowchart illustrating a processing procedure of the search phase of the information processing device according to the present embodiment.
FIG. 10 is a flowchart illustrating a processing procedure of search processing based on a plurality of sentences.
FIG. 11 is a diagram for explaining other processing of the information processing device.
FIG. 12 is a diagram illustrating an exemplary hardware configuration of a computer that implements functions similar to those of the information processing device according to the embodiments.

### DESCRIPTION OF EMBODIMENTS

Hereinafter, embodiments of an information processing program, an information processing method, and an information processing device disclosed in the present application will be described in detail with reference to the drawings. Note that the present invention is not limited by these embodiments.

### [Embodiments]

The information processing device according to the present embodiment performs processing in a preparation phase and processing in a search phase. First, processing in the preparation phase executed by the information processing device will be described. For example, the preparation phase includes processing of specifying a feature word of a sentence and processing of clustering the sentence.

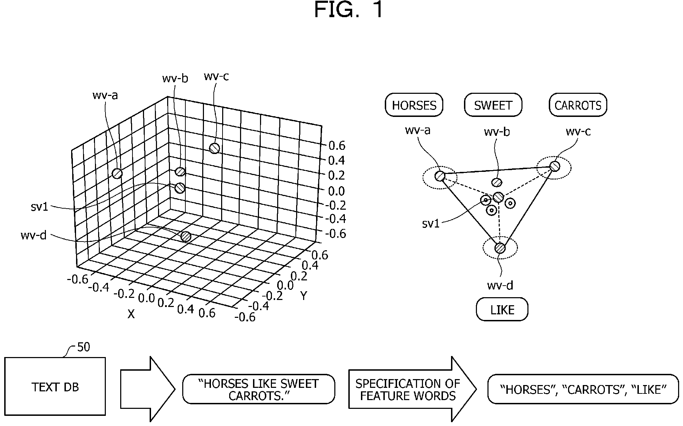

FIG. 1 is a diagram for explaining processing of specifying feature words of a sentence. In FIG. 1, a case where a feature word is specified from a sentence "Horses like sweet carrots." registered in a text DB 50 will be described.

The information processing device specifies a vector of each word included in the sentence "Horses like sweet carrots.", based on a word vector dictionary that defines a relationship between a word and a vector of the word. In the following description, the vector of the word will be expressed as a "word vector". For example, the word vector of "horses" is assumed as wv-a. The word vector of "sweet" is assumed as wv-b. The word vector of "carrots" is assumed as wv-c. The word vector of "like" is assumed as wv-d. Illustration of word vectors of "wa", "ga", and "da" is omitted. The information processing device calculates a sentence vector sv1 of the sentence "Horses like sweet carrots." by integrating the word vectors of the respective words of the sentence "Horses like sweet carrots.".

The information processing device calculates cosine similarity between the sentence vector sv1 and each of the word vectors wv-a to wv-d and specifies a word having a word vector deviating from the sentence vector sv1, as a "feature word", based on the cosine similarity. For example, the information processing device treats a word having a word vector whose cosine similarity with the sentence vector sv1 is equal to or greater than a threshold value, as a feature word.

In FIG. 1, it is assumed that the cosine similarity between the sentence vector sv1 and the word vector wv-a, the cosine similarity between the sentence vector sv1 and the word vector wv-c, and the cosine similarity between the sentence vector sv1 and the word vector wv-d are all equal to or greater than the threshold value. Accordingly, the information processing device specifies the word "horses" having the word vector wv-a, the word "carrots" having the word vector wv-c, and the word "like" having the word vector wv-d, as the feature words.

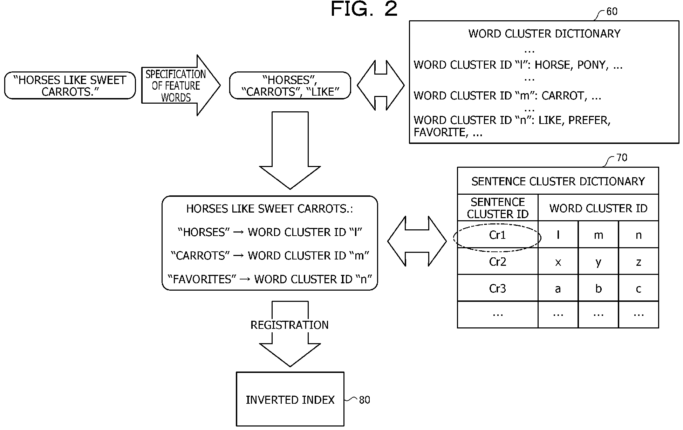

Subsequently, the information processing device clusters the sentence, based on the feature words specified in the processing in FIG. 1. FIG. 2 is a diagram for explaining clustering processing. The information processing device specifies a word cluster identifier (ID) of each feature word, based on a word cluster dictionary 60. In the word cluster dictionary 60, a plurality of words is classified into a plurality of clusters, and the word cluster IDs are individually set for each cluster. The information processing device specifies the word cluster ID set for the cluster to which the feature word belongs and treats the specified word cluster ID as the word cluster ID of the feature word.

For example, the information processing device specifies a word cluster ID "l" set for the cluster including the feature word "horses", based on the word cluster dictionary 60, and treats the specified word cluster ID "l" as the word cluster ID of the feature word "horses". The information processing device specifies a word cluster ID "m" set for the cluster including the feature word "carrots", based on the word cluster dictionary 60, and treats the specified word cluster ID "m" as the word cluster ID of the feature word "carrots". The information processing device specifies a word cluster ID "n" set for the cluster including the feature word "like", based on the word cluster dictionary 60, and treats the specified word cluster ID "n" as the word cluster ID of the feature word "like".

By executing the above processing, the information processing device specifies the word cluster IDs "l", "m", and "n" corresponding to the feature words "horses", "carrots", and "like". The information processing device sets a set of such word cluster IDs "l", "m", and "n", as a set of word cluster IDs corresponding to the sentence "Horses like sweet carrots.".

Subsequently, the information processing device specifies a sentence cluster to which the sentence belongs, based on the set of word cluster IDs set for the sentence and a sentence cluster dictionary 70. Here, the sentence cluster dictionary 70 associates a sentence cluster ID that identifies a cluster of a sentence, with a set of word cluster IDs. For example, the sentence cluster ID corresponding to the word cluster IDs "l", "m", and "n" is "Cr1". Therefore, the information processing device specifies the sentence cluster ID of the sentence cluster to which the sentence "Horses like sweet carrots." belongs, as "Cr1".

The information processing device registers the specified sentence cluster ID of the sentence "Horses like sweet carrots." and the position of the sentence "Horses like sweet carrots." on the text DB 50 in association with each other in an inverted index 80.

The information processing device repeatedly executes the above processing on each sentence registered in the text DB 50 and registers the relationship between the sentence cluster ID of each sentence and its position for each sentence in the inverted index 80.

As described above, the information processing device according to the present embodiment specifies a set of feature words from a plurality of words included in a sentence and specifies the sentence cluster ID of the cluster to which the sentence belongs, based on the set of feature words and the sentence cluster dictionary 70. This may enable appropriate clustering of the sentence.

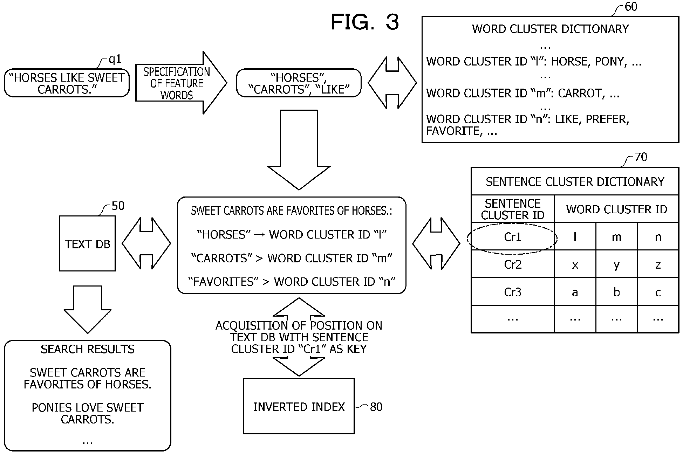

Next, processing in the search phase executed by the information processing device will be described. FIG. 3 is a diagram (1) for explaining processing in the search phase. In the description of FIG. 3, a case where a single sentence "Sweet carrots are favorites of horses." is designated as a search query q1 will be described.

Upon receiving the search query q1, the information processing device specifies feature words "horse", "carrots", and "favorites" from the sentence "Sweet carrots are favorites of horses." of the search query q1. Processing in which the information processing device specifies the feature words from a plurality of words included in the sentence is similar to the processing described with reference to FIG. 1.

The information processing device specifies the word cluster ID of each feature word, based on each feature word and the word cluster dictionary 60. For example, the information processing device specifies the word cluster ID "l" set for the cluster including the feature word "horses", based on the word cluster dictionary 60, and treats the specified word cluster ID "l" as the word cluster ID of the feature word "horses". The information processing device specifies the word cluster ID "m" set for the cluster including the feature word "carrots", based on the word cluster dictionary 60, and treats the specified word cluster ID "m" as the word cluster ID of the feature word "carrots". The information processing device specifies the word cluster ID "n" set for the cluster including the feature word "favorites", based on the word cluster dictionary 60, and treats the specified word cluster ID "n" as the word cluster ID of the feature word "favorites".

By executing the above processing, the information processing device specifies the word cluster IDs "l", "m", and "n" corresponding to the feature words "horses", "carrots", and "favorites". The information processing device sets a set of such word cluster IDs "l", "m", and "n", as a set of word cluster IDs corresponding to the sentence "Sweet carrots are favorites of horses." of the search query q1.

The information processing device specifies the sentence cluster to which the sentence of the search query q1 belongs, based on the set of word cluster IDs set for the sentence of the search query q1 and the sentence cluster dictionary 70. For example, the sentence cluster ID corresponding to the word cluster IDs "l", "m", and "n" is "Cr1". Therefore, the information processing device specifies the sentence cluster ID of the sentence cluster to which the sentence "Sweet carrots are favorites of horses." of the search query q1 belongs, as "Cr1".

The information processing device specifies the position on the text DB 50 of a sentence belonging to the sentence cluster ID (for example, "Cr1") corresponding to the sentence of the search query q1, based on the sentence cluster ID and the inverted index 80. The information processing device extracts a sentence from the specified position and outputs the extracted sentence as a search result.

As described above, the information processing device specifies a set of feature words from a plurality of words included in the search query q1 and specifies the sentence cluster ID corresponding to the search query q1, based on the set of feature words and the sentence cluster dictionary 70. Then, the information processing device performs a search, based on the inverted index 80 created in advance and the sentence cluster ID corresponding to the search query q1. This may enable to appropriately locate a sentence corresponding to the search query q1 in the search.

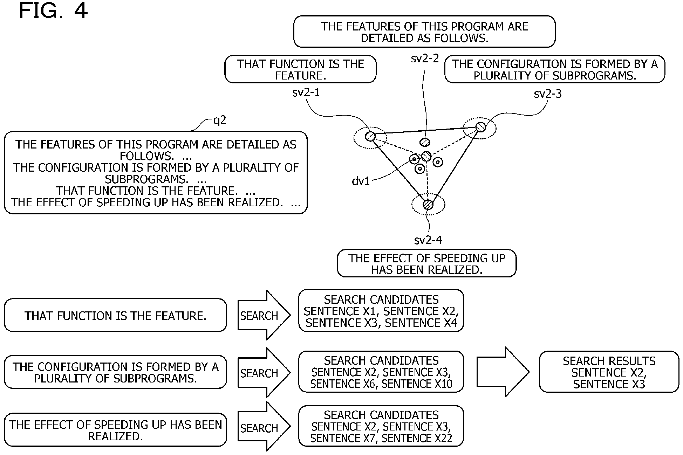

Subsequently, FIG. 4 will be described. FIG. 4 is a diagram (2) for explaining processing in the search phase. In the description of FIG. 4, a case where a plurality of sentences such as paragraphs and items is designated as a search query will be described. For example, a search query q2 includes a plurality of sentences "The features of this program are detailed as follows. ... The configuration is formed by a plurality of subprograms.... That function is the feature.... The effect of speeding up has been realized. ...".

The information processing device individually calculates sentence vectors of a plurality of sentences included in the search query q2. For example, the information processing device calculates a sentence vector of one sentence by integrating word vectors of a plurality of words included in the one sentence. Alternatively, the information processing device may execute the processing described with reference to FIGS. 1 and 2 to specify a set of word cluster IDs of the respective feature words of the sentence and use the specified set of word cluster IDs as the sentence vector.

In the example illustrated in FIG. 4, the sentence vector of the sentence "That function is the feature" is assumed as a sentence vector sv2-1. The sentence vector of the sentence "The features of this program are detailed as follows." is assumed as a sentence vector sv2-2. The sentence vector of the sentence "The configuration is formed by a plurality of subprograms." is assumed as a sentence vector sv2-3. The sentence vector of the sentence "The effect of speeding up has been realized." is assumed as a sentence vector sv2-4.

The information processing device calculates a document vector dv1 by integrating sentence vectors of a plurality of sentences included in the search query q2.

The information processing device calculates cosine similarity between the document vector dv1 and each of the sentence vectors sv2-1 to sv2-4 and specifies a sentence having a sentence vector deviating from the document vector dv1, as a "feature sentence", based on the cosine similarity. For example, the information processing device treats a sentence having a sentence vector whose cosine similarity with the document vector dv1 is equal to or greater than a threshold value, as the feature sentence.

In FIG. 4, it is assumed that the cosine similarity between the document vector dv1 and the sentence vector sv1-1, the cosine similarity between the document vector dv1 and the sentence vector sv1-3, and the cosine similarity between the document vector dv1 and the sentence vector sv1-4 are all equal to or greater than the threshold value. Accordingly, the information processing device specifies the sentence having the sentence vector sv1-1, the sentence having the sentence vector sv1-3, and the sentence having the sentence vector sv1-4, as the feature sentences.

The information processing device searches the text DB 50 for a sentence corresponding to the feature sentences by executing the processing described with reference to FIG. 3 for each feature sentence. In the example illustrated in FIG. 4, a sentence X1, a sentence X2, a sentence X3, and a sentence X4 are located in the search, as search candidates corresponding to the feature sentence "That function is the feature.". The sentence X2, the sentence X3, a sentence X6, and a sentence X10 are located in the search, as search candidates corresponding to the feature sentence "The configuration is formed by a plurality of subprograms.". The sentence X2, the sentence X3, a sentence X7, and a sentence X22 are located in the search, as search candidates corresponding to the feature sentence "The effect of speeding up has been realized.".

The information processing device specifies a sentence common to the search candidates for the respective feature sentences, as a final search result. In the example illustrated in FIG. 4, the sentence X2 and the sentence X3 common to each search candidate are output as a final search result.

As described above, in a case where the search query q2 includes a plurality of sentences, the information processing device specifies the feature sentences and specifies a sentence common to the search results corresponding to the feature sentences, as a final search result. This may enable an efficient search for a sentence corresponding to the search query q2 even if the search query q2 includes a plurality of sentences.

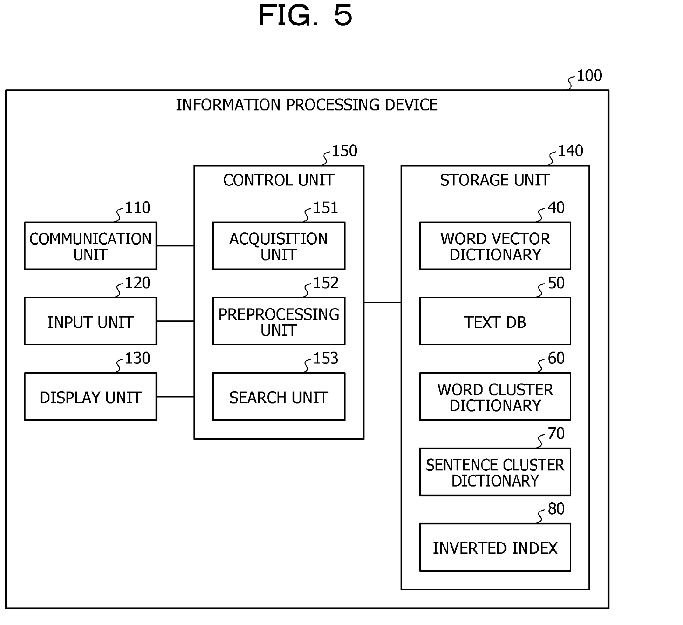

Next, a configuration example of the information processing device that executes the processing described above will be described. FIG. 5 is a functional block diagram illustrating a configuration of the information processing device according to the present embodiment. As illustrated in FIG. 5, an information processing device 100 includes a communication unit 110, an input unit 120, a display unit 130, a storage unit 140, and a control unit 150.

The communication unit 110 is coupled to an external device or the like in a wired or wireless manner and transmits and receives information to and from the external device or the like. For example, the communication unit 110 is implemented by a network interface card (NIC) or the like. The communication unit 110 may be coupled to a network (not illustrated).

The input unit 120 is an input device that inputs various types of information to the information processing device 100. The input unit 120 corresponds to a keyboard, a mouse, a touch panel, and the like. For example, a user may operate the input unit 120 to input data or the like, such as a sentence and a search query.

The display unit 130 is a display device that displays information output from the control unit 150. The display unit 130 corresponds to a liquid crystal display, an organic electro luminescence (EL) display, a touch panel, and the like. For example, the search result of the search query is displayed on the display unit 130.

The storage unit 140 includes a word vector dictionary 40, the text DB 50, the word cluster dictionary 60, the sentence cluster dictionary 70, and the inverted index 80. The storage unit 140 is implemented by, for example, a semiconductor memory element such as a random access memory (RAM) or a flash memory, or a storage device such as a hard disk or an optical disc.

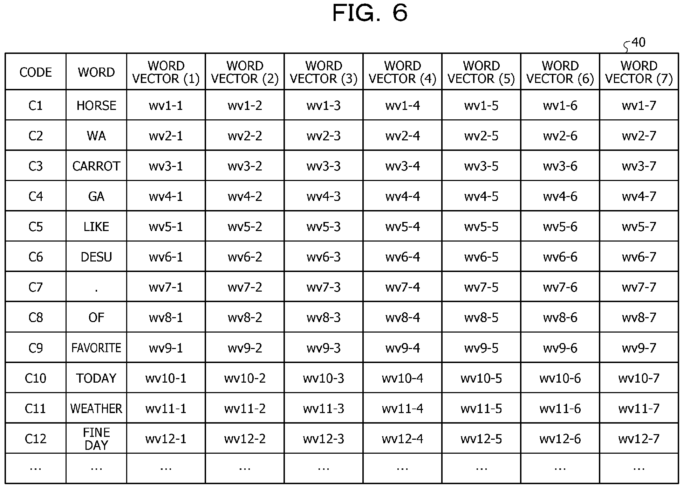

The word vector dictionary 40 is a table that defines codes and word vectors allocated to words. FIG. 6 is a diagram illustrating an exemplary data structure of the word vector dictionary. As illustrated in FIG. 6, this word vector dictionary 40 includes a code, a word, and word vectors (1) to (7). The code denotes a code allocated to a word. The word denotes a word included in a character string. The word vectors (1) to (7) denote vectors allocated to a word. An n-th component of a word vector will be expressed as a word vector (n) (n = 1 to 7).

The text DB 50 is a database that stores a plurality of sentences. For example, the text DB 50 includes a plurality of records. One record includes a plurality of sentences.

In the word cluster dictionary 60, a plurality of words is classified into a plurality of clusters, and the word cluster IDs are individually set for each cluster. A plurality of words classified into the same cluster has cosine similarity between word vectors of the respective words equal to or greater than the threshold value. Other descriptions regarding the word cluster dictionary 60 are similar to those given with reference to FIG. 2.

The sentence cluster dictionary 70 associates the sentence cluster ID that identifies a cluster of a sentence, with a set of word cluster IDs. A plurality of sentences belonging to the same sentence cluster is set with the same sentence cluster ID. Other descriptions regarding the sentence cluster dictionary 70 are similar to those given with reference to FIG. 2.

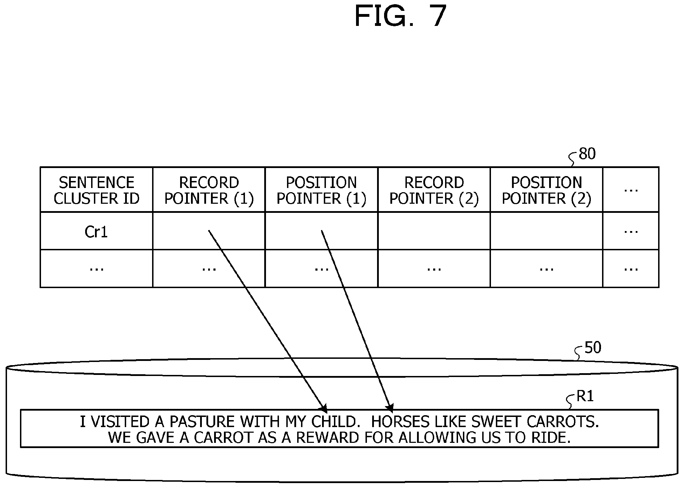

The inverted index 80 associates the sentence cluster ID with the position (the position on the text DB 50) of a sentence belonging to the sentence cluster ID. FIG. 7 is a diagram illustrating a data structure of the inverted index. As illustrated in FIG. 7, a plurality of sets of record pointers and position pointers is set in this inverted index 80 in association with the sentence cluster ID. The record pointer indicates a position of the relevant record. The position indicated by the record pointer is defined by the number of words from the top word of the text DB 50 to the top word of the record (offset). The position pointer indicates the position of the relevant sentence. The position pointer is defined by an offset from the top word of the record including the relevant sentence to the top word of the relevant sentence.

For example, in a case where the sentence cluster ID of the sentence "Horses like sweet carrots." is "Cr1" and the sentence "Horses like sweet carrots." is included in a record R1, settings are made as follows. That is, the offset of the record R1 is set in the record pointer (1) corresponding to the sentence cluster ID "Cr1". The offset of the sentence "Horses like sweet carrots." is set in the position pointer (1) corresponding to the sentence cluster ID "Cr1".

Note that the data structure of the inverted index 80 is not limited to that in FIG. 7 and may be designed to simply associate the sentence cluster ID with the offset of each sentence belonging to the relevant sentence cluster ID.

The description returns to FIG. 5. The control unit 150 includes an acquisition unit 151, a preprocessing unit 152, and a search unit 153. The control unit 150 is implemented by, for example, a central processing unit (CPU) or a micro processing unit (MPU). In addition, the control unit 150 may be executed by, for example, an integrated circuit such as an application specific integrated circuit (ASIC) or a field programmable gate array (FPGA).

The acquisition unit 151 acquires various types of information via the communication unit 110 or the input unit 120. For example, in a case where information on a record is acquired, the acquisition unit 151 registers the acquired information on the record in the text DB 50.

The preprocessing unit 152 executes the processing in the preparation phase described above. The preprocessing unit 152 acquires a sentence from the text DB and executes the processing described with reference to FIG. 1, thereby specifying a feature word included in the sentence. When specifying the feature word, the preprocessing unit 152 then executes sentence clustering as described with reference to FIG. 2. For example, the preprocessing unit 152 specifies the word cluster IDs set for the clusters to which each feature word belongs, based on the word cluster dictionary 60. The preprocessing unit 152 specifies the sentence cluster ID to which the sentence belongs, based on a set of the specified word cluster IDs and the sentence cluster dictionary 70. The preprocessing unit 152 sets the cluster ID of the sentence, the record pointer and the position pointer capable of specifying the position of the sentence, in the inverted index 80 in association with each other.

The preprocessing unit 152 repeatedly executes the above processing for each sentence registered in the text DB 50.

The search unit 153 executes the processing in the search phase described above. The search unit 153 acquires a search query via the communication unit 110 or the input unit 120. The search unit 153 determines whether one sentence or a plurality of sentences is included in the search query.

A case where a search query includes a single sentence will be described. In a case where one sentence is included in the search query, the search unit 153 executes the processing described with reference to FIG. 3. For example, the search unit 153 specifies a feature word from the sentence included in the search query. The search unit 153 specifies a set of word cluster IDs of the respective feature words, based on each feature word and the word cluster dictionary 60. The search unit 153 specifies the sentence cluster ID corresponding to the search query, based on the set of word cluster IDs and the sentence cluster dictionary 70.

The search unit 153 specifies a set of the record pointer and the position pointer corresponding to the sentence cluster ID, based on the sentence cluster ID corresponding to the search query and the inverted index 80. The search unit 153 acquires a sentence (a plurality of sentences) corresponding to the specified set of the record pointer and the position pointer from the text DB 50 and displays the acquired sentence (plurality of sentences) on the display unit 130 as a search result. The search unit 153 may notify the external device of the search result.

Subsequently, a case where the search query includes a plurality of sentences such as paragraphs and items will be described. In a case where a plurality of sentences is included in the search query, the search unit 153 executes the processing described with reference to FIG. 4. The search unit 153 specifies a feature sentence from the plurality of sentences included in the search query. The search unit 153 specifies the sentence cluster ID of each feature sentence, based on sets of word cluster IDs corresponding to each feature sentence and the sentence cluster dictionary 70. The search unit 153 acquires a plurality of sentences (search results) corresponding to each feature sentence from the text DB 50, based on the sentence cluster ID of each feature sentence and the inverted index 80. The search unit 153 locates a sentence common to the search results corresponding to each feature sentence in a search, as a final search result. The search unit 153 displays the search result on the display unit 130. The search unit 153 may notify the external device of the search result.

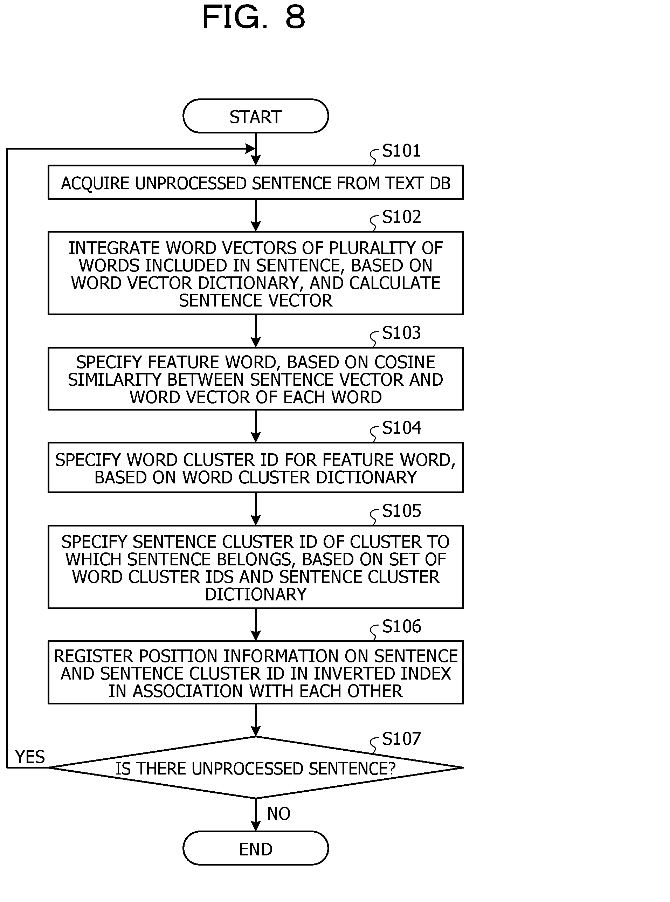

Next, exemplary processing procedures of the information processing device according to the present embodiment will be described. FIG. 8 is a flowchart illustrating a processing procedure of the preparation phase of the information processing device according to the present embodiment. As illustrated in FIG. 8, the preprocessing unit 152 of the information processing device 100 acquires an unprocessed sentence from the text DB 50 (step S101). The preprocessing unit 152 integrates word vectors of a plurality of words included in the sentence, based on the word vector dictionary 40, and calculates the sentence vector (step S102).

The preprocessing unit 152 specifies a feature word, based on the cosine similarity between the sentence vector and the word vector of each word (step S103). The preprocessing unit 152 specifies the word cluster ID for the feature word, based on the word cluster dictionary 60 (step S104).

The preprocessing unit 152 specifies the sentence cluster ID of the cluster to which the sentence belongs, based on a set of word cluster IDs for the feature words of the sentence and the sentence cluster dictionary 70 (step S105). The position information (the set of the record pointer and the position pointer) on the sentence and the sentence cluster ID are registered in the inverted index 80 in association with each other (step S106).

In a case where there is an unprocessed sentence in the text DB 50 (step S107, Yes), the preprocessing unit 152 proceeds to step S101. On the other hand, in a case where there is no unprocessed sentence in the text DB 50 (step S107, No), the preprocessing unit 152 ends the processing in the preparation phase.

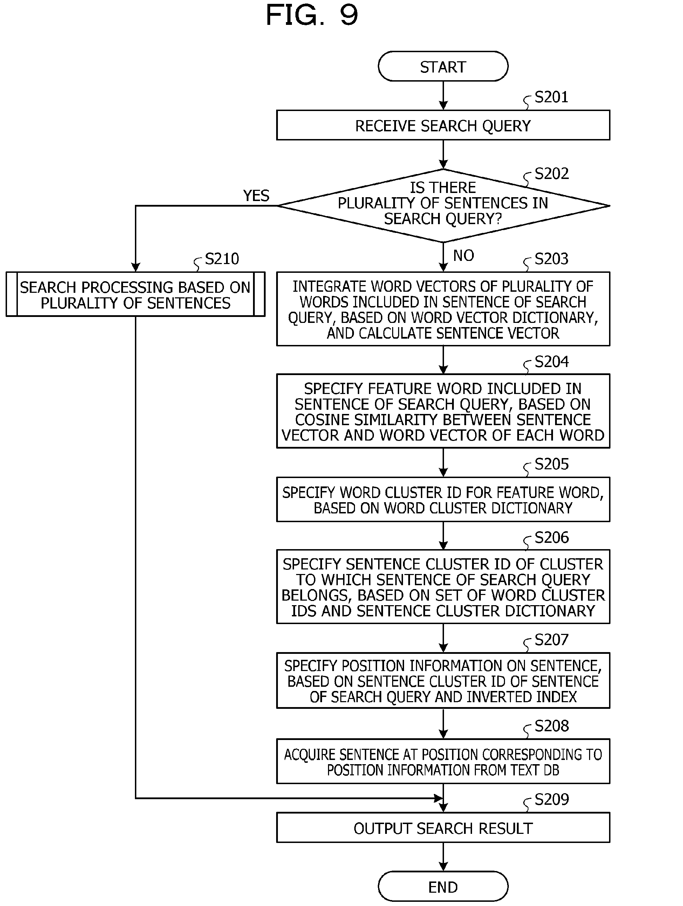

FIG. 9 is a flowchart illustrating a processing procedure of the search phase of the information processing device according to the present embodiment. As illustrated in FIG. 9, the search unit 153 of the information processing device 100 receives a search query (step S201). The search unit 153 determines whether or not a plurality of sentences is included in the search query (step S202).

In a case where a plurality of sentences is not included in the search query (step S202, No), the search unit 153 proceeds to step S203. The search unit 153 integrates word vectors of a plurality of words included in the sentence of the search query, based on the word vector dictionary 40, and calculates the sentence vector (step S203).

The search unit 153 specifies a feature word included in the sentence of the search query, based on the cosine similarity between the sentence vector and the word vector of each word (step S204). The search unit 153 specifies the word cluster ID for the feature word, based on the word cluster dictionary 60 (step S205).

The search unit 153 specifies the sentence cluster ID of the cluster to which the sentence of the search query belongs, based on a set of word cluster IDs for the feature words of the sentence of the search query and the sentence cluster dictionary 70 (step S206). The search unit 153 specifies position information on a sentence corresponding to the sentence cluster ID, based on the sentence cluster ID of the sentence of the search query and the inverted index 80 (step S207).

The search unit 153 acquires the sentence at the position corresponding to the position information from the text DB 50 (step S208). The search unit 153 outputs the search result (step S209).

On the other hand, in step S202, in a case where a plurality of sentences is included in the search query (step S202, Yes), the search unit 153 proceeds to step S210. The search unit 153 executes search processing based on a plurality of sentences (step S210) and proceeds to step S209.

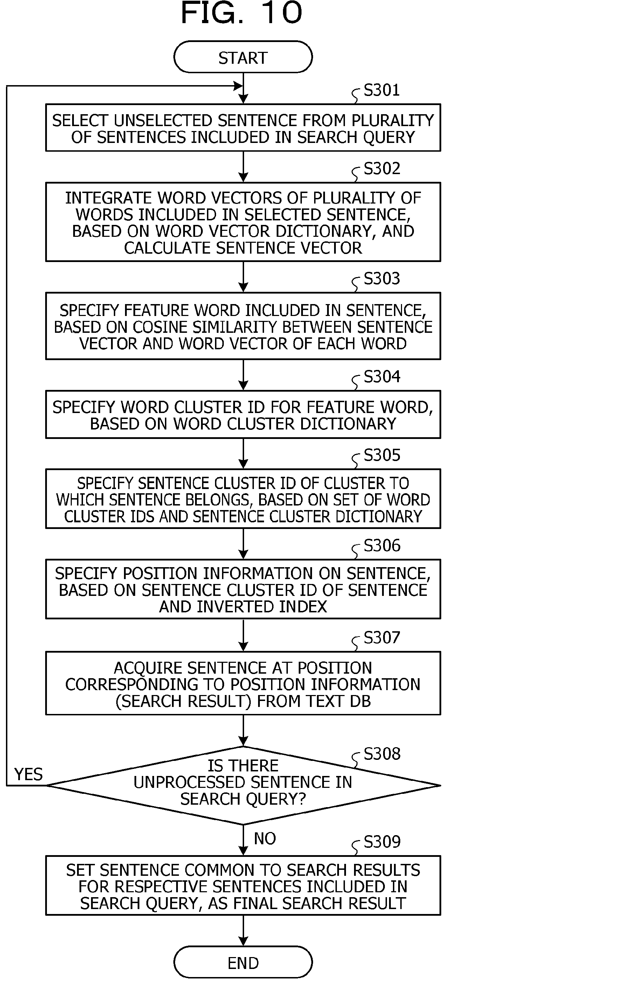

Here, an exemplary processing procedure of the search processing based on a plurality of sentences illustrated in step S210 in FIG. 9 will be described. FIG. 10 is a flowchart illustrating a processing procedure of the search processing based on a plurality of sentences. As illustrated in FIG. 10, the search unit 153 of the information processing device 100 selects an unselected sentence from the plurality of sentences included in the search query (step S301).

The search unit 153 integrates word vectors of a plurality of words included in the selected sentence, based on the word vector dictionary 40, and calculates the sentence vector (step S302). The search unit 153 specifies a feature word included in the sentence, based on the cosine similarity between the sentence vector and the word vector of each word (step S303). The search unit 153 specifies the word cluster ID for the feature word, based on the word cluster dictionary 60 (step S304).

The search unit 153 specifies the sentence cluster ID of the cluster to which the sentence belongs, based on a set of word cluster IDs for the feature words of the sentence and the sentence cluster dictionary 70 (step S305). The search unit 153 specifies position information on a sentence corresponding to the sentence cluster ID, based on the sentence cluster ID of the sentence and the inverted index 80 (step S306).

The search unit 153 acquires the sentence at the position corresponding to the position information (search result) from the text DB 50 (step S307).

In a case where there is an unprocessed sentence in the search query (step S308, Yes), the search unit 153 proceeds to step S301. In a case where there is no unprocessed sentence in the search query (step S308, No), the search unit 153 sets a sentence common to the search results for the respective sentences included in the search query, as a final search result (step S309), and ends the search processing based on a plurality of sentences.

Next, effects of the information processing device 100 according to the present embodiment will be described. The information processing device 100 specifies a set of feature words from a plurality of words included in a sentence and specifies the sentence cluster ID of the cluster to which the sentence belongs, based on the set of feature words and the sentence cluster dictionary 70. This may enable appropriate clustering of the sentence.

The information processing device 100 calculates the cosine similarity between the sentence vector of the sentence and the word vectors of the plurality of words and specifies a word having a word vector whose cosine similarity with the sentence vector is equal to or greater than the threshold value, as a feature word. This may enable to specify the feature word that deviates from the sentence vector.

The information processing device 100 generates the inverted index 80 by associating the sentence cluster ID of the cluster to which the sentence belongs, with the position information on the sentence. By using such an inverted index 80, it may be enabled to easily specify position information on a plurality of sentences belonging to the same sentence cluster ID.

The information processing device 100 specifies a set of feature words from a plurality of words included in the search query q1 containing one sentence and specifies the sentence cluster ID corresponding to the search query q1, based on the set of feature words and the sentence cluster dictionary 70. Then, the information processing device 100 performs a search, based on the inverted index 80 created in advance and the sentence cluster ID corresponding to the search query q1. This may enable to appropriately locate a sentence corresponding to the search query q1 in the search.

In a case where the search query q2 includes a plurality of sentences, the information processing device 100 specifies feature sentences and specifies a sentence common to the search results corresponding to the feature sentences, as a final search result. This may enable an efficient search for a sentence corresponding to the search query q2 even if the search query q2 includes a plurality of sentences.

Meanwhile, the processing of the information processing device 100 described above is an example, and the information processing device 100 may execute other processing. Hereinafter, other processing of the information processing device 100 will be described.

In a case where a search query containing a plurality of sentences is received, the search unit 153 of the information processing device 100 specifies a plurality of feature sentences whose cosine similarity is equal to or greater than the threshold value and detects a sentence common to search results using each feature sentence, as a final search result. Here, the search unit 153 may further execute processing of increasing or decreasing the number of feature sentences by receiving a change in the threshold value to be compared with the cosine similarity.

For example, the search unit 153 receives, from the input unit 120, a change in the threshold value used when specifying a feature sentence and repeatedly executes processing of displaying the relationship between the changed value of the threshold value and the feature sentences on the display unit 130. The number of feature sentences decreases as the value of the threshold value becomes greater, and the number of feature sentences increases as the value of the threshold value becomes smaller. In a case where a confirmation instruction is received from the input unit 120, the search unit 153 confirms the feature sentences. Processing after the search unit 153 confirms the feature sentences is similar to that in the above-described conventional technique.

Furthermore, by increasing or decreasing the number of feature sentences included in a search query, such as paragraphs or items, in execution of the above processing by the search unit 153 of the information processing device 100, a zoom-in/out function for increasing or decreasing the number of search candidates can be implemented.

In addition, in the information processing device 100 described above, a case of clustering a plurality of sentences with respect to a character string of a text has been described. However, instead of the sentences, the processing can be similarly executed also on information such as the protein primary structure of the base sequence of the genome and the functional group primary structure of the chemical structural formula of the organic compound. For example, the primary structure of the protein includes a plurality of repeatedly appearing continuous base acid sequences Kmer. In the following description, the continuous base acid sequence Kmer will be expressed as a "basic structure" of the protein. Note that the "basic structure" of the protein may be sometimes expressed by a continuous amino acid sequence oligopeptide or the like.

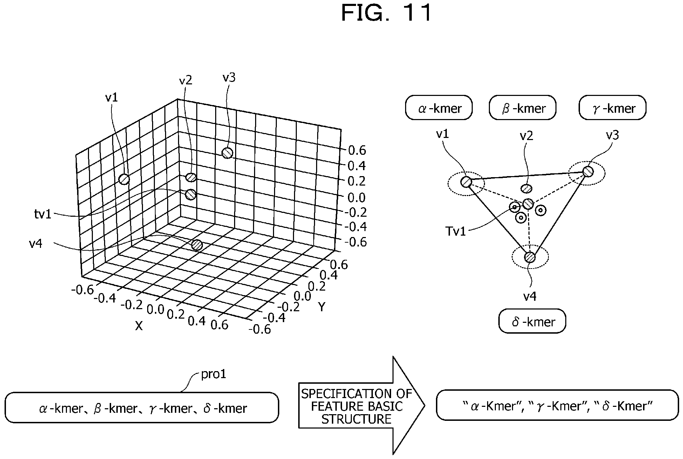

FIG. 11 is a diagram for explaining other processing of the information processing device. As illustrated in FIG. 11, a primary structure Pro1 of the protein includes a plurality of basic structures "α-Kmer", "β-Kmer", "γ-Kmer", and "δ-Kmer".

The information processing device 100 specifies the vector of each basic structure included in the primary structure Pro1 of the protein, based on a basic structure vector dictionary that defines the basic structures and vectors of the basic structures. For example, the vector of the basic structure "α-Kmer" is assumed as v1. The vector of the basic structure "β-Kmer" is assumed as v2. The vector of the basic structure "γ-Kmer" is assumed as v3. The vector of the basic structure "δ-Kmer" is assumed as v4. The information processing device 100 calculates a vector tv1 of the primary structure Pro1 by integrating the vectors of the respective basic structures included in the primary structure Pro1 of the protein.

The information processing device 100 calculates cosine similarity between the vector tv1 and each of the vectors v1 to v4 and specifies a basic structure having a vector deviating from the vector tv1, as a "feature basic structure", based on the cosine similarity. For example, the information processing device treats a basic structure having a vector whose cosine similarity with the vector tv1 is equal to or greater than a threshold value, as a feature basic structure.

In FIG. 11, it is assumed that the cosine similarity between the vector tv1 and the vector v1, the cosine similarity between the vector tv1 and the vector v3, and the cosine similarity between the vector tv1 and the vector v4 are all equal to or greater than the threshold value. Accordingly, the information processing device specifies the basic structure "α-Kmer" having the vector v1, the basic structure "γ-Kmer" having the vector v3, and the basic structure "δ-Kmer" having the vector v4, as the feature basic structures.

The information processing device 100 clusters the primary structure, based on the feature basic structures specified in the above processing. In specific processing, similarly to FIG. 2, basic structure cluster IDs are allocated to each feature basic structure, and a cluster ID of the primary structure is specified based on a set of basic structure cluster IDs. The other processing is similar to processing in which the feature words in the processing described with reference to FIG. 2 are replaced with the feature basic structures and the sentence is replaced with the primary structure. Similarly, the search processing is also similar to processing in which the feature words in the processing described with reference to FIGS. 3 and 4 are replaced with the feature basic structures and the sentence is replaced with the primary structure. Using an inverted index associated with the cluster ID of the protein primary structure, a similar receptor can be located in the search with respect to a search query for a receptor constituted by a plurality of primary structures. By applying this, a receptor similar to a receptor that is a target of a ligand of a biopharmaceutical drug can be located in a search, and a side reaction of the biopharmaceutical drug can be estimated.

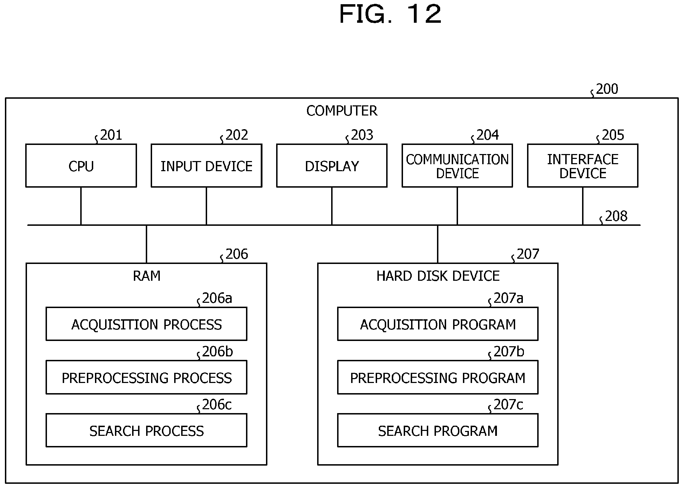

Next, an exemplary hardware configuration of a computer that implements functions similar to those of the information processing device 100 indicated in the above embodiment will be described. FIG. 12 is a diagram illustrating an exemplary hardware configuration of the computer that implements functions similar to those of the information processing device according to the embodiment.

As illustrated in FIG. 12, a computer 200 includes a CPU 201 that executes various types of arithmetic processing, an input device 202 that receives data input from a user, and a display 203. In addition, the computer 200 includes a communication device 204 that exchanges data with an external device or the like via a wired or wireless network, and an interface device 205. The computer 200 also includes a RAM 206 that temporarily stores various types of information, and a hard disk device 207. Additionally, each of the devices 201 to 207 is coupled to a bus 208.

The hard disk device 207 includes an acquisition program 207a, a preprocessing program 207b, and a search program 207c. In addition, the CPU 201 reads each of the programs 207a to 207c to load the read programs 207a to 207c into the RAM 206.

The acquisition program 207a functions as an acquisition process 206a. The preprocessing program 207b functions as a preprocessing process 206b. The search program 207c functions as a search process 206c.

Processing of the acquisition process 206a corresponds to the processing of the acquisition unit 151. Processing of the preprocessing process 206b corresponds to the processing of the preprocessing unit 152. Processing of the search process 206c corresponds to the processing of the search unit 153.

Note that each of the programs 207a to 207c has not necessarily to be previously stored in the hard disk device 207. For example, each of the programs may be stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a to 207c.

### REFERENCE SIGNS LIST

- 40: Word vector dictionary
- 50: Text DB
- 60: Word cluster dictionary
- 70: Sentence cluster dictionary
- 80: Inverted index
- 100: Information processing device
- 110: Communication unit
- 120: Input unit
- 130: Display unit
- 140: Storage unit
- 150: Control unit
- 151: Acquisition unit
- 152: Preprocessing unit
- 153: Search unit

## Claims

1. An information processing program for causing a computer to execute processing comprising:
acquiring a plurality of sentences that contain a plurality of words;
executing, on the plurality of sentences, processing of specifying sets of feature words from the plurality of words, based on sentence vectors of the sentences that contain the plurality of words and word vectors of the plurality of words; and
classifying the plurality of sentences such that the sentences that have a same one of the sets of the feature words are included in a same one of clusters.

2. The information processing program according to claim 1, wherein the processing of specifying the sets of feature words includes calculating cosine similarity between the sentence vectors of the sentences and the word vectors of the plurality of words, and specifying the words that have the word vectors of which the cosine similarity with the sentence vectors is equal to or greater than a threshold value, as the feature words.

3. The information processing program according to claim 1, wherein
the plurality of sentences is registered in a storage device, and
the computer is further caused to execute the processing that includes generating inverted index information in which identification information that identifies the clusters to which the sentences belong is associated with position information on the sentences in the storage device, based on a classification result of the classifying.

4. The information processing program according to claim 3, for further causing the computer to execute the processing comprising: when search sentences that contain the plurality of words are received, specifying the sets of feature words from the plurality of words in the search sentences, based on the sentence vectors of the search sentences and the word vectors of the words in the search sentences; and locating the sentences that correspond to the search sentences from the storage device in a search, based on the identification information on the clusters for the specified sets of feature words and the inverted index information.

5. The information processing program according to claim 4, for further causing the computer to execute the processing comprising: when a plurality of the search sentences is received, specifying a plurality of feature sentences, based on the sentence vectors of the plurality of the search sentences; specifying the sets of feature words from each of the plurality of feature sentences; specifying the identification information on the clusters of the respective feature sentences, based on the sets of feature words that correspond to the feature sentences; and locating, in the search, a common sentence that corresponds to each of the feature sentences from the storage device, based on the identification information on the clusters of the respective feature sentences and the inverted index information.

6. The information processing program according to claim 5, for further causing the computer to execute the processing comprising increasing or decreasing a number of the plurality of feature sentences specified from the plurality of the search sentences.

7. An information processing method for causing a computer to execute processing comprising:
acquiring a plurality of sentences that contain a plurality of words;
executing, on the plurality of sentences, processing of specifying sets of feature words from the plurality of words, based on sentence vectors of the sentences that contain the plurality of words and word vectors of the plurality of words; and
classifying the plurality of sentences such that the sentences that have a same one of the sets of the feature words are included in a same one of clusters.

8. The information processing method according to claim 7, wherein the processing of specifying the sets of feature words includes calculating cosine similarity between the sentence vectors of the sentences and the word vectors of the plurality of words, and specifying the words that have the word vectors of which the cosine similarity with the sentence vectors is equal to or greater than a threshold value, as the feature words.

9. The information processing method according to claim 7, wherein
the plurality of sentences is registered in a storage device, and
the computer is further caused to execute the processing that includes generating inverted index information in which identification information that identifies the clusters to which the sentences belong is associated with position information on the sentences in the storage device, based on a classification result of the classifying.

10. The information processing method according to claim 9, for further causing the computer to execute the processing comprising: when search sentences that contain the plurality of words are received, specifying the sets of feature words from the plurality of words in the search sentences, based on the sentence vectors of the search sentences and the word vectors of the words in the search sentences; and locating the sentences that correspond to the search sentences from the storage device in a search, based on the identification information on the clusters for the specified sets of feature words and the inverted index information.

11. The information processing method according to claim 10, for further causing the computer to execute the processing comprising: when a plurality of the search sentences is received, specifying a plurality of feature sentences, based on the sentence vectors of the plurality of the search sentences; specifying the sets of feature words from each of the plurality of feature sentences; specifying the identification information on the clusters of the respective feature sentences, based on the sets of feature words that correspond to the feature sentences; and locating, in the search, a common sentence that corresponds to each of the feature sentences from the storage device, based on the identification information on the clusters of the respective feature sentences and the inverted index information.

12. The information processing method according to claim 11, for further causing the computer to execute the processing comprising increasing or decreasing a number of the plurality of feature sentences specified from the plurality of the search sentences.

13. An information processing device comprising:
a control unit configured to:
acquire a plurality of sentences that contain a plurality of words;
execute, on the plurality of sentences, processing of specifying sets of feature words from the plurality of words, based on sentence vectors of the sentences that contain the plurality of words and word vectors of the plurality of words; and
classify the plurality of sentences such that the sentences that have a same one of the sets of the feature words are included in a same one of clusters.

14. The information processing device according to claim 13, wherein the processing to specify the sets of feature words includes calculating cosine similarity between the sentence vectors of the sentences and the word vectors of the plurality of words, and specifying the words that have the word vectors of which the cosine similarity with the sentence vectors is equal to or greater than a threshold value, as the feature words.

15. The information processing device according to claim 13, wherein
the plurality of sentences is registered in a storage device, and
the control unit further executes the processing that includes generating inverted index information in which identification information that identifies the clusters to which the sentences belong is associated with position information on the sentences in the storage device, based on a classification result of the classifying.

16. The information processing device according to claim 15, wherein the control unit, when search sentences that contain the plurality of words are received, specifies the sets of feature words from the plurality of words in the search sentences, based on the sentence vectors of the search sentences and the word vectors of the words in the search sentences; and locates the sentences that correspond to the search sentences from the storage device in a search, based on the identification information on the clusters for the specified sets of feature words and the inverted index information.

17. The information processing device according to claim 16, wherein the control unit, when a plurality of the search sentences is received, specifies a plurality of feature sentences, based on the sentence vectors of the plurality of the search sentences; specifies the sets of feature words from each of the plurality of feature sentences; specifies the identification information on the clusters of the respective feature sentences, based on the sets of feature words that correspond to the feature sentences; and locates, in the search, a common sentence that corresponds to each of the feature sentences from the storage device, based on the identification information on the clusters of the respective feature sentences and the inverted index information.

18. The information processing device according to claim 17, wherein the control unit increases or decreases a number of the plurality of feature sentences specified from the plurality of the search sentences.
